# EUROPEAN PATENT APPLICATION

(11) **EP 3 933 500 A1**
(43) Date of publication of application: **05.01.2022**
(21) Application number: 20211243.9
(22) Date of filing: 02.12.2020
(51) Int. Cl.: G03B 7/00, G03B 7/01, G03B 30/00, H04N 5/00, H04N 9/00, G06T 5/50

(54) **MULTI-FUNCTIONAL PHOTOGRAPHING METHOD CAPABLE OF REPRESENTING FLASH EFFECT BY USING EXPOSURE AMOUNT, LIGHT SENSITIVITY, AND PHOTOGRAPHING SHUTT-OFF FUNCTION**

(30) Priority: 01.07.2020 KR 20200081081
(71) Applicant: BK LTD., Gumi-si, Gyeongsangbuk-do 39377 (KR)
(72) Inventor: BAHK, Jae Hyun, 39247 Gumi-si (KR)
(74) Representative: Müller Verweyen

(57) **Abstract**

The present invention relates to a photographing method designed to provide a dynamic photographing effect as well as a multi-functional photographing method capable of representing the same effect of using a flash without using the flash in such a way that a user uses an exposure amount, light sensitivity and a photographing shut-off function by dividing a total photographing time at the time of photographing into a plurality of photographing time intervals, and varying and selecting at least one of the exposure amount, the light sensitivity, and the photographing shut-off function, which are variables in a set photographing time interval, so as to provide the same effect of slow sync photographing as using a flash for a first curtain mode and a rear curtain mode when taking a picture or a video with a digital camera.

## Description

### [Technical Field]

The present invention relates to a technology for implementing the same photographing effect as using a flash without the flash when taking a picture or video with a digital camera and, more particularly, to a multi-functional photographing method, which may implement an exposure amount capable of representing an effect similar to the flash by dividing a total photographing time at the time of photographing into a plurality of photographing time intervals, and varying the exposure amount and the light sensitivity of the camera from each other in a set photographing time interval.

### [Background Art]

With the recent advance of mobile camera technology, many mobile users have been getting the same satisfaction as photographing with a single lens reflex (SLR)/digital single lens reflex (DSLR) camera, even when photographing with a mobile camera instead of the SLR/DSLR. However, the gap of photographic technology between advanced SLR/DSLR and mobile camera still exists in many areas. In particular, photographing techniques such as slow sync, which can be classified into first curtain sync or rear curtain sync, which corresponds to advanced photographing using flash, belong to a technical field that is difficult to implement with a cheap digital camera or a mobile phone.

Slow sync is a technique used for photographing a moving subject at a slow shutter speed mainly when the surroundings are dark, in which the shutter speed is longer than 1/200 sec. to 1/250 sec. By applying the slow-sync photographing technique, it is possible to achieve an effect of taking a long ray of car lights or get a picture with persons and dark backgrounds standing out. Assuming that the camera's shutter speed is two seconds, the image of a subject upon flash firing will remain bright in the picture, and the background that the light of the flash cannot reach is revived between two seconds from the flash firing until the shutter closes, and thus it is possible to photograph with the slow-sync technique.

In this case, the first curtain sync means that the flash fires while the shutter is opened at the same time, whereas the rear curtain sync means that the flash fires before the shutter closes. The first curtain sync is suitable for portrait photographing against a background of night scene because the initial movement of the subject becomes clear, and the rear curtain sync is suitable for portrait photographing against a dark background because the last movement of the subject is revived.

In a mobile camera, the flash is generally used to bring the camera into focus when the amount of light is insufficient due to the dark surroundings when photographing. However, there is a disadvantage of producing a problematic picture in which a face image taken by the mobile camera using the flash is too white, and the like. In order to solve these shortcomings, it is necessary for a mobile camera to implement a synchronized picture by appropriately controlling an exposure amount such as correct exposure, overexposure and underexposure, but it is almost impossible to do so.

### [Related Art References]

### [Patent Document]

(Patent Document 1) Korean Registered Patent No. 10-0799213 (Jan. 23, 2008)
(Patent Document 2) Korean Unexamined Patent No. 10-2009-0020291 (Feb. 26, 2009)

### [Disclosure]

### [Technical Problem]

A technical object of the present invention is to provide a multi-functional photographing method capable of representing a flash effect by using an exposure amount, light sensitivity and a photographing shut-off function by dividing a total photographing time at the time of photographing into a plurality of photographing time intervals, and varying the exposure amount and the light sensitivity of the camera from each other in a set photographing time interval, so as to implement the same photographing effect as using a flash without the flash.

### [Technical Solution]

To solve the technical object as described above, there may be provided a multi-functional photographing method capable of representing a flash effect by using an exposure amount, light sensitivity and a photographing shut-off function according to the present invention, which performs a flash effect by allowing a user to input a menu provided to the user in a digital camera which runs by an application that is activated after being downloaded in the digital camera or a server of the digital camera, and in which the method includes the steps of setting a total photographing time, dividing a photographing time interval, selecting a variable, and setting a variable. In the step of setting a total photographing time, a time (total photographing time) from the opening of a shutter to the closing of the shutter for a specific subject may be set. In the step of dividing a photographing time interval, the total photographing time may be divided into a plurality of photographing time intervals. In the step of selecting a variable, at least one variable may be selected from an exposure amount, light sensitivity, and a photographing shut-off function, which are applied to each of the photographing time intervals divided in the step of dividing the photographing time interval. In the step of setting a variable, a value of the variable selected in the step of selecting the variable may be set. All of the times allocated to the plurality of photographing time intervals may be the same, or at least one photographing time interval may be set differently from the time allocated to the rest of the photographing time intervals.

### [Advantageous Effects]

The present invention has an advantage of implementing the same photographing effect as using a flash without the flash by dividing a total photographing time at the time of photographing into a plurality of photographing time intervals, and varying an exposure amount and light sensitivity of a camera from each other in a set photographing time interval.

### [Description of Drawings]

FIG. 1 shows a multi-functional photographing method capable of representing a flash effect by using an exposure amount, light sensitivity and a photographing shut-off function according to the present invention.
FIG. 2 shows detailed steps of setting a photographing mode.
FIG. 3 shows detailed steps of selecting a variable.
FIG. 4 shows detailed steps of setting a variable.
FIG. 5 shows an example of menus of dividing a photographing time interval, selecting a photographing mode, and selecting a variable, which are provided by a mobile camera.
FIG. 6 shows another example of menus of dividing a photographing time interval, selecting a photographing mode, and selecting a variable, which are provided by a mobile camera.
FIG. 7 shows still another example of menus of dividing a photographing time interval, selecting a photographing mode, and selecting a variable, which are provided by a mobile camera.
FIG. 8 shows still another example of menus of dividing a photographing time interval, selecting a photographing mode, and selecting a variable, which are provided by a mobile camera.
FIG. 9 shows a method for selecting a photographing mode according to a menu provided by a mobile camera.
FIG. 10 shows one embodiment of photographing in a first curtain sync mode.
FIG. 11 shows another embodiment of photographing in a first curtain sync mode.
FIG. 12 shows an example in which a user photographs in a rear curtain sync mode.
FIG. 13 shows an example in which a user photographs in a multi-curtain sync mode.
FIG. 14 shows an image actually photographed by applying a photographing method with a flash effect according to the present invention to a digital camera.

### [Mode for Invention]

In order to fully understand the present invention, operational advantages of the present invention, and objects achieved by the implementation of the present invention, reference should be made to the accompanying drawings for explaining exemplary embodiments of the present invention and the contents described in the accompanying drawings.

Hereinafter, the present invention will be described in detail by describing a preferred embodiment of the present invention with reference to the accompanying drawings. The same reference numerals in each drawing indicate the same members.

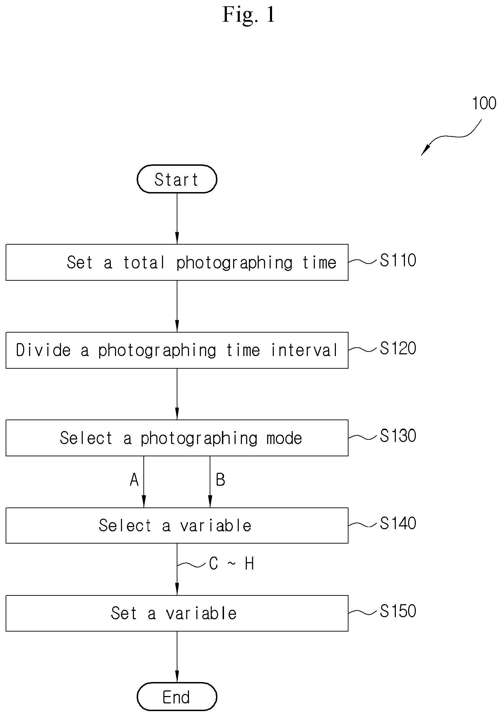

FIG. 1 shows a multi-functional photographing method capable of representing a flash effect by using an exposure amount, light sensitivity and a photographing shut-off function according to the present invention.

A multi-functional photographing method 100 (hereinafter, multi-functional photographing method) capable of representing a flash effect by using an exposure amount, light sensitivity and a photographing shut-off function according to the present invention will run in a digital camera in which an application (hereinafter, app) designed to control an operation or perform the multi-functional photographing method 100 in a server (not shown) built in the digital camera is downloaded and activated.

Referring to FIG. 1, the multi-functional photographing method 100 may perform the steps of setting a total photographing time 110, dividing a photographing time interval 120, selecting a photographing mode 130, selecting a variable 140, and setting a variable 150.

In the step of setting the total photographing time 110, a total time taken for a shutter to open and close once when photographing an object (subject) to be photographed (hereinafter, total photographing time) may be set.

In the step of dividing the photographing time interval 120, the total photographing time set in the step of setting the total photographing time 110 may be divided into a plurality of photographing time intervals. Each of the plurality of photographing time intervals may be set to the same time, while the time allocated to each of the time intervals may be set differently from each other depending on a user's selection.

In the step of selecting the photographing mode 130, one of a first curtain mode, a rear curtain mode, or a multi-mode, which is a special photographing, may be selected. The first curtain mode and the rear curtain mode have already been described, and thus will not be described in detail herein. The multi-mode may be selected when both the first curtain mode and the rear curtain mode are to be used.

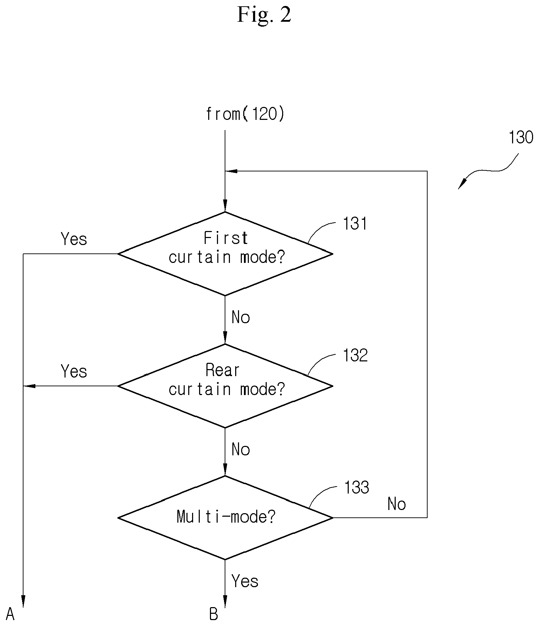

FIG. 2 shows detailed steps of setting a photographing mode.

Referring to FIG. 2, it can be understood that a path (A) continued after selecting the first curtain mode 131 and the rear curtain mode 132 as the photographing mode (131, Yes; 132, Yes) is different from a path (B) continued after selecting the multi-mode 133 (133, Yes).

In the step of selecting the variable 140, a variable to be changed may be selected in each mode according to results of selection made in the step of selecting the photographing mode 130.

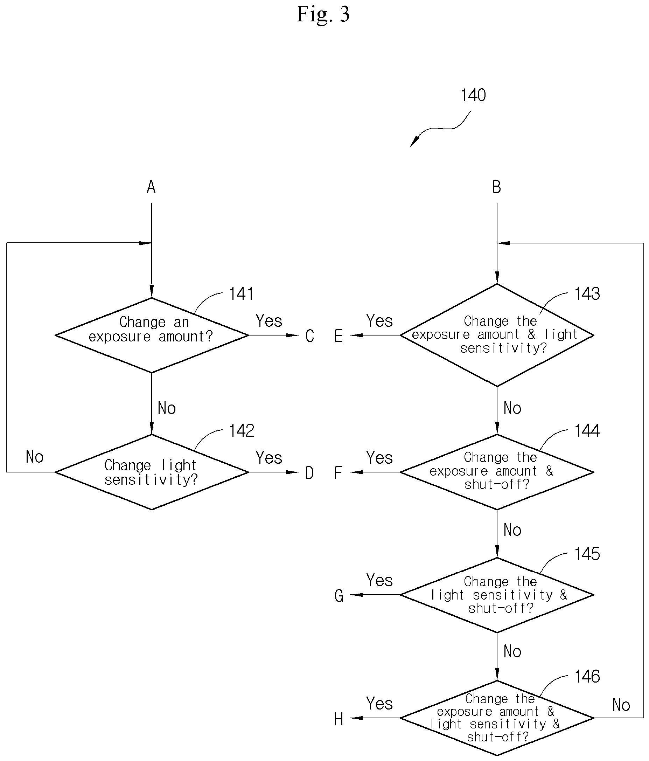

FIG. 3 shows detailed steps of selecting a variable.

Referring to FIG. 3, in the step of selecting the variable 140, whether the variable to be changed is an exposure amount 141 or light sensitivity 142 may be selected when the first curtain mode 131 and the rear curtain mode 132 are selected in the step of selecting the photographing mode 130 (A). When the variable to be changed is the exposure (141, Yes), the path C may be subsequently followed. When the variable to be changed is the light sensitivity (142, Yes), the path D may be subsequently followed.

In addition, whether the variable to be changed is the exposure amount & light sensitivity 144, the exposure amount & shut-off 144, the light sensitivity & shut-off 145, or the exposure amount & light sensitivity & shut-off 146 may be selected when the multi-mode 133 is selected in the step of selecting the photographing mode 130. When the variable to be changed is the exposure amount & light sensitivity (143, Yes), the path E may be subsequently followed. When the variable to be changed is the exposure amount & shut-off (144, Yes), the path F may be subsequently followed. When the variable to be changed is the light sensitivity & shut-off (145, Yes), the path G may be subsequently followed. And, when the variable to be changed is the exposure amount & light sensitivity & shut-off (146, Yes), the path H may be subsequently followed. In this case, shut-off may mean shutting off of photographing, and may mean that photographing is not performed in the selected photographing time interval.

In the step of setting the variable 150, a corresponding variable may be changed according to results of selection made in the step of selecting the variable 140.

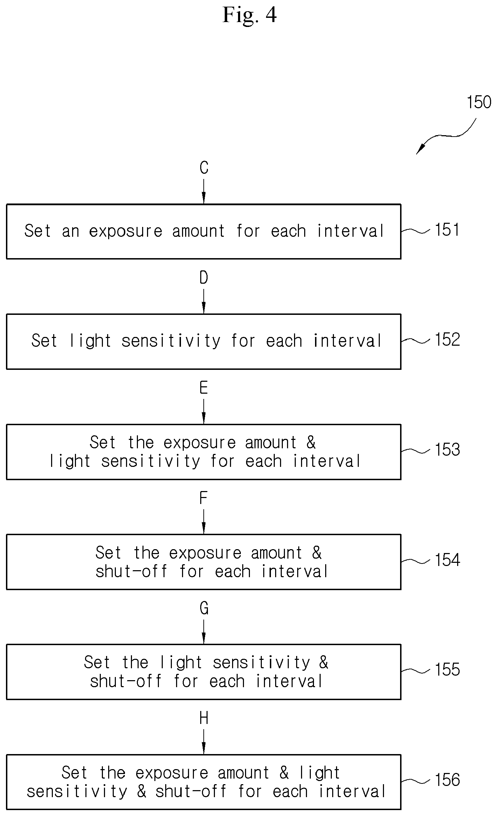

FIG. 4 shows detailed steps of setting a variable.

Referring to FIG. 4, in the step of setting the variable 150, the processes of changing all the six distinct variables (151 to 156) may be performed according to results of selection made in the step of selecting the variable 140.

When the variable to be changed is the exposure amount (141, Yes, & C) in the step of selecting the variable 140, the exposure amount may be selected for each interval divided in the step of dividing the photographing time interval 120.

When the variable to be changed is the light sensitivity (142, Yes, & D) in the step of selecting the variable 140, the light sensitivity may be selected for each interval divided in the step of dividing the photographing time interval 120.

When the variable to be changed is the exposure amount & light sensitivity (143, Yes, & E) in the step of selecting the variable 140, the exposure amount and the light sensitivity may be selected for each interval divided in the step of dividing the photographing time interval 120.

When the variable to be changed is the exposure amount & shut-off (144, Yes, & F) in the step of changing the variable 140, the exposure amount and the shut-off may be selected for each interval divided in the step of dividing the photographing time interval 120.

When the variable to be changed is the light sensitivity & shut-off (145, Yes, & G) in the step of selecting the variable 140, the light sensitivity and the shut-off may be selected for each interval divided in the step of dividing the photographing time interval 120.

When the variable to be changed is the exposure amount & light sensitivity & shut-off (146, Yes, & H) in the step of changing the variable 140, the exposure amount, the light sensitivity, and the shut-off may be selected for each interval divided in the step of dividing the photographing time interval 120.

In this case, the exposure amount may mean a degree of opening of a shutter, and may be roughly classified into a basic exposure amount (correct exposure), an overexposure amount having the exposure amount larger than the basic exposure amount (or basic exposure), and an underexposure amount (or underexposure) having the exposure amount smaller than the basic exposure amount. In practice, it would be possible to allow a user to distinguish the exposure amount according to numbers or the amount of bars on the graph.

The light sensitivity of a digital camera may be determined by detecting a degree of the light sensitivity of an image sensor built in the digital camera that corresponds to the light sensitivity of the film of a film camera. In general, as the value of the light sensitivity is higher, a picture may be photographed with a higher brightness. Like the exposure amount, the light sensitivity may be also classified into correct sensitivity, oversensitivity having the light sensitivity higher than the correct sensitivity, and undersensitivity having the light sensitivity lower than the correct sensitivity.

Although not described in detail, the exposure amount and the light sensitivity may be represented in numbers. For example, assuming that the correct exposure and the correct sensitivity are 0 (zero), the correct exposure may be a value preset in the digital camera and may be variable according to the surrounding brightness. Thus, it is preferable that the overexposure and the oversensitivity are represented with the addition of a + (positive) sign in front of numbers, and the underexposure and the undersensitivity are represented with the addition of a-(negative) sign in front of numbers. Large numbers may represent the exposure and the light sensitivity which are more (for positive) or less (for negative) than smaller numbers.

In this case, "shut-off" may mean that photographing is not performed in a corresponding interval, and this interval will be processed as black. The processing of the corresponding time interval as black may be performed in such a manner that a detection signal of the image sensor (not shown) is not processed in the corresponding time interval.

If a picture is taken while setting of the total photographing time, dividing of the photographing time interval, selecting of the photographing mode, and selecting and setting of the variable are completed as above, the same picture as using a flash may be obtained without the flash as will be described later, and the effect of the present invention may be improved when using the flash.

A photographing mode selected in the step of selecting the photographing mode 130 may be related to the variable selected in the step of selecting the variable 140. In other words, if the first curtain mode is selected, the allocation of the variable to be selected later needs to match the first curtain mode. Accordingly, in an actual embodiment, the photographing mode may be immediately determined by the variable selected in the step of selecting the variable 140 without performing the step of selecting the photographing mode 130.

However, if the step of selecting the variable is performed after selecting the photographing mode, the photographing mode may be accurately selected according to the user's actual desire in the step of selecting the variable. As described above, the selecting of the first curtain mode needs to be generally performed in such a manner that the exposure amount is increased at the initial photographing time and the exposure amount is decreased at the subsequent photographing time. However, if the first curtain mode is selected in the step of selecting the photographing mode 130 and then the variable is selected differently or oppositely in the subsequent step of selecting the variable 140, which materializes the selection of the first curtain mode, a server of the digital camera, which performs the multi-functional photographing method according to the present invention, may sense this different or opposite selection to support the user's input action, so that the photographing mode selected by the user may correspond to the selection of the variable.

Hereinafter, in order to describe an embodiment of the present invention, it is assumed that an application (hereinafter, app) for allowing a mobile camera to receive the service provided by the present invention is downloaded and activated.

First, various embodiments of selecting the total photographing time, the photographing time interval, and the variable will be described.

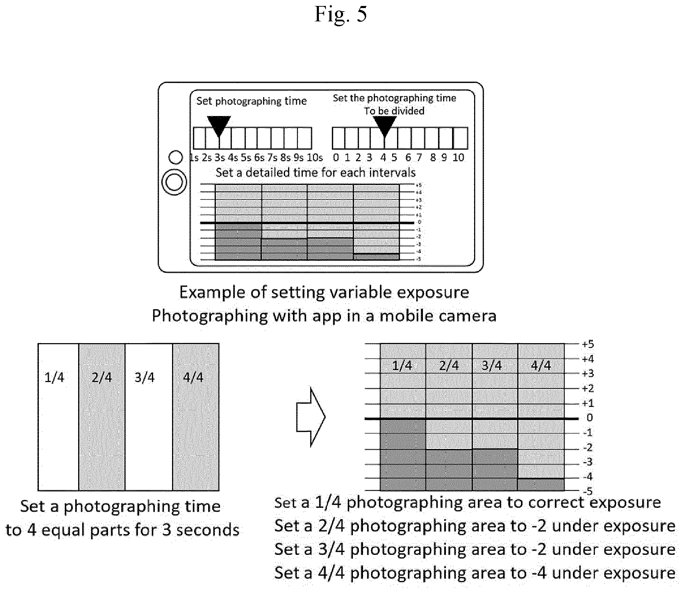

FIG. 5 shows an example of menus of dividing a photographing time interval, selecting a photographing mode, and selecting a variable, which are provided by a mobile camera.

Referring to the upper drawing of FIG. 5, it can be understood that a menu, which allows the user to set the photographing time, is played at the upper left portion of the mobile camera screen lying on the side, a setting menu, which allows the user to classify the selected photographing time into a plurality of photographing time intervals, is provided at the upper right portion of the mobile camera screen, and a menu, which allows the user to set the exposure amount for each of the four photographing time intervals set by the user, is provided at the lower portion of the mobile camera screen.

It is assumed that the user sets the photographing time to three seconds (3s), and that the set photographing time is divided into a total of four photographing time intervals (upper portion of the mobile camera). Referring to the lower portion of the mobile camera screen and the lower right portion of FIG. 5, it can be understood that the exposure amount in the first photographing time interval (1/4) is set to correct exposure (0), the exposure amounts in the second photographing time interval (2/4) and the third photographing time interval (3/4) are set to 2 underexposure (-2) respectively, and the exposure amount in the last fourth photographing time interval (4/4) is set to 4 underexposure (-4).

FIG. 5 shows an embodiment in which four divided photographing time intervals are equal and detailed times of the divided photographing time intervals may be different from each other as described below.

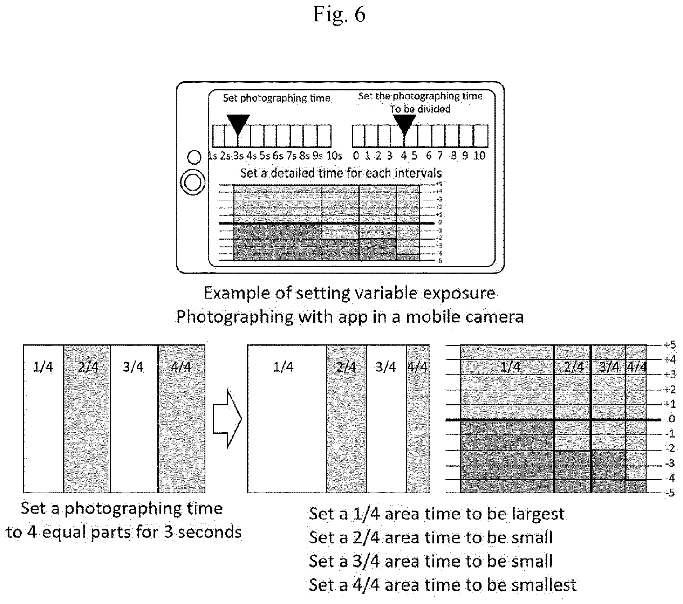

FIG. 6 shows another example of menus of dividing a photographing time interval, selecting a photographing mode, and selecting a variable, which are provided by a mobile camera.

Compared with the embodiment shown in FIG. 5, it can be understood that times allocated to the four photographing time intervals are different from each other in the embodiment shown in FIG. 6. It can be understood that the first photographing time interval (1/4) is the longest, the second photographing time interval and the third photographing time interval (2/4, 3/4) are the next longest, and the last fourth photographing time interval (4/4) is allocated to the shortest time.

Except for these differences, the embodiment of FIG. 6 is the same as that of FIG. 5, and thus detailed descriptions will be omitted.

The embodiments shown in FIGS. 5 and 6 describe the selection of the photographing time, the photographing time interval, and the exposure amount among the variables.

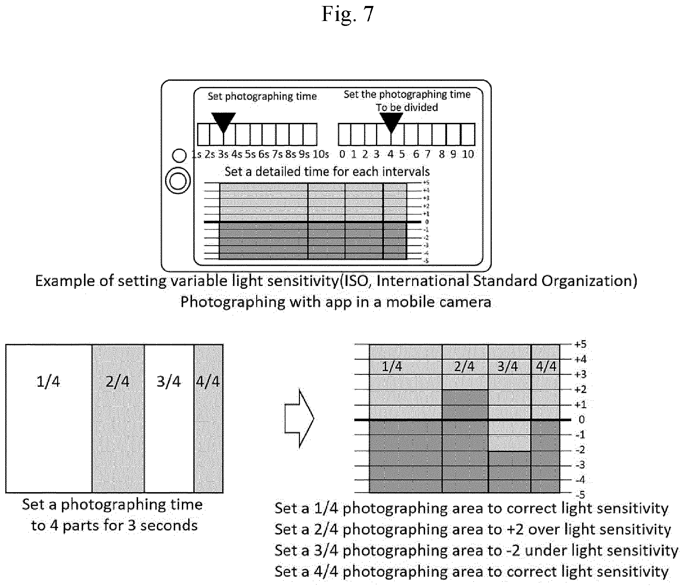

FIG. 7 shows still another example of menus of dividing a photographing time interval, selecting a photographing mode, and selecting a variable, which are provided by a mobile camera.

If the exposure amount among the variables is changed in the embodiments shown in FIGS. 5 and 6, an example of selecting the light sensitivity among the variables will be described in the embodiment shown in FIG. 7.

Referring to FIG. 7, it can be understood from each of the four divided photographing time intervals that the light sensitivity in the first interval (1/4) is set to correct sensitivity (0), the light sensitivity in the second interval (2/4) is set to 2 oversensitivity (+2), the light sensitivity in the third interval (3/4) is set to 2 undersensitivity (-2), and the light sensitivity in the last fourth interval (4/4) is set again to the correct sensitivity (0).

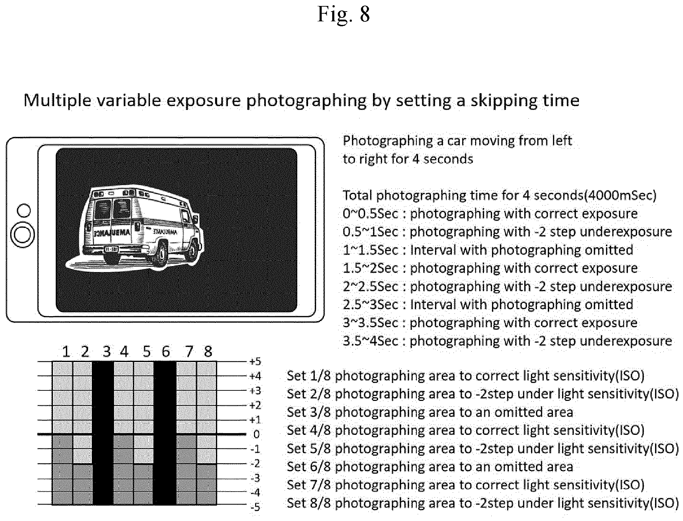

FIG. 8 shows still another example of menus of dividing a photographing time interval, selecting a photographing mode, and selecting a variable, which are provided by a mobile camera.

Referring to FIG. 8, it can be understood that a car moving from left to right is photographed, the photographing time is set to four seconds, the photographing time interval is classified into a total of eight intervals, the time allocated to each of the photographing time intervals is 0.5 seconds, and the variable is the exposure amount, the light sensitivity, and the shut-off.

It can be understood that the light sensitivity in the first interval (1/8) is set to correct sensitivity (0), the exposure amount in the second interval (2/8) is set to 2 underexposure (-2), the photographing in the third interval (3/8) is shut off (omitted), the light sensitivity in the fourth interval (4/8) is set to correct sensitivity (0), the exposure amount in the fifth interval (5/8) is set to 2 underexposure (-2), the photographing in the sixth interval (6/8) is shut off (omitted), the light sensitivity in the seventh interval (7/8) is set to correct sensitivity (0), and the exposure amount in the last eighth interval (8/8) is set to 2 underexposure (-2).

As described above, the variables may be classified into the exposure amount, the light sensitivity, and the photographing shut-off, in which an embodiment for the exposure amount has been described in FIGS. 5 and 6, an embodiment for the light sensitivity has been described in FIG. 7, and embodiments for the exposure amount, the light sensitivity, and the photographing shut-off have been described in FIG. 8, respectively.

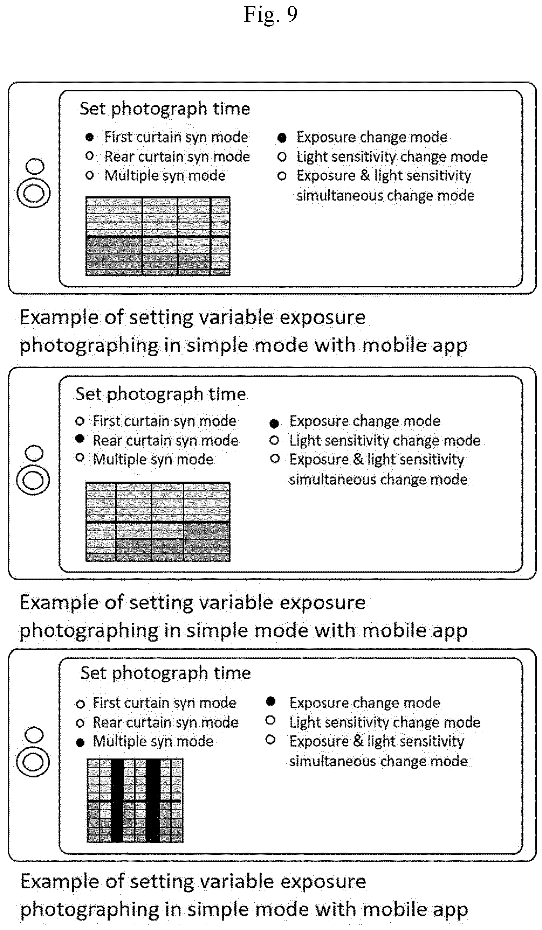

FIG. 9 shows a method for selecting a photographing mode according to a menu provided by a mobile camera.

An embodiment of selecting a first curtain mode, a rear curtain mode, and a multi-mode will be described from top to bottom in FIG. 9. Among the variables allocated to the corresponding photographing time interval, the exposure amount or the light sensitivity may be displayed at a lower portion of each screen.

Hereinafter, an image actually photographed with the settings as shown in FIGS. 5 to 9 will be described.

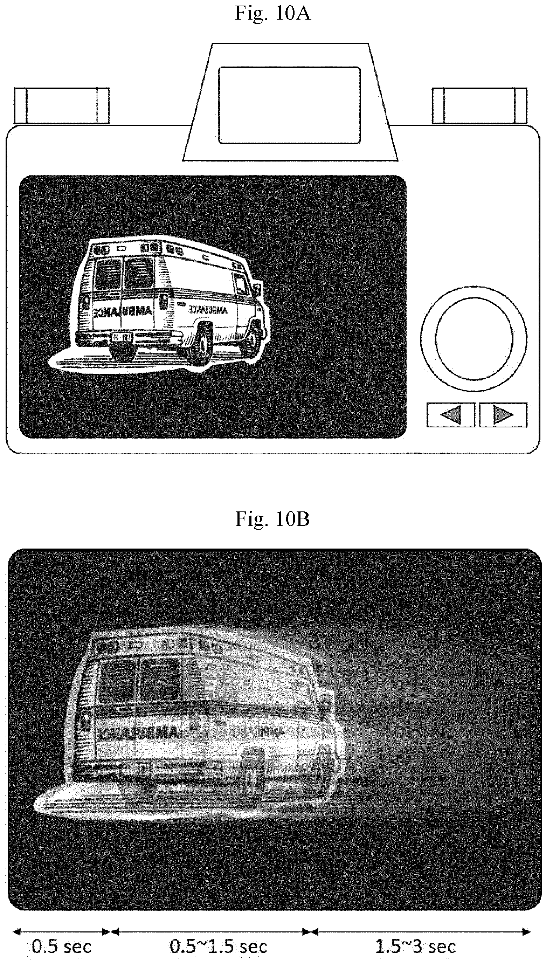

FIG. 10 shows one embodiment of photographing in a first curtain sync mode.

Fig. 10A shows a car moving from left to right, and Fig. 9B shows an image obtained by photographing the car shown in Fig. 9A in a first curtain sync mode for three seconds.

Referring to FIG. 10A, it can be understood that a car moving from left to right is photographed in the first curtain sync mode for three seconds in such a way that the photographing time interval is divided into a total of three (0-0.5 sec, 0.5-1.5 sec, and 1.5-3 sec), and that photographing is performed with the correct exposure in the first photographing time interval (0-0.5 sec), with 2 underexposure (-2) in the second photographing timer interval (0.5-1.5 sec), and with 4 underexposure (-4) in the third photographing time interval (1.5-3 sec).

Referring to the image shown in FIG. 10B, it can be confirmed that the movement of the car is clearly displayed at first, but is gradually blurred as the car moves from left to right, thereby obtaining the resulting picture with the same effect as the first curtain sync. Thus, it can be understood that an outline of the moving car is photographed by setting the exposure amount to the correct exposure for 0 to 0.5 seconds out of the total photographing time of three seconds, the car is photographed to have a slightly blurred movement (30-50%) with 2 underexposure for 0.5 to 1.5 seconds, and the car is photographed to have a more blurred movement (15-30%) with 4 underexposure for 1.5 to 3 seconds.

In the following description, assuming that the object to be photographed is the car moving from left to right (Fig. 10A), only the photographing mode and the variables to be changed will be described.

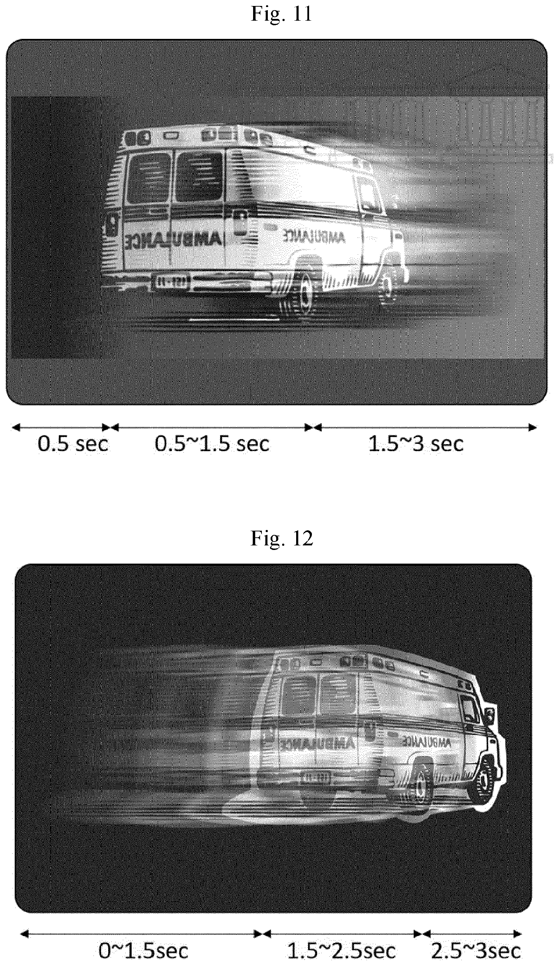

FIG. 11 shows another embodiment of photographing in a first curtain sync mode.

As shown in FIG. 11, the resulting picture is obtained by assuming that the photographing time is night, the car moving from left to right is photographed for three seconds, and the photographing time interval is classified into a total of the three photographing time intervals (0-0.5 sec, 0.5-1.5 sec, and 1.5-3 sec). Photographing is performed with the correct exposure (0) in the first interval (0-0.5 sec), with 2 overexposure amount (+2) in the second interval (0.5-1.5 sec), and with 4 overexposure amount (+4) in the last third interval (1.5-3 sec).

Referring to FIG. 11, it can be understood that the dark background of the moving car disappears and only the outline of the car is displayed even though photographing is performed at night. When photographing between 0.5 and 1.5 seconds, photographing is performed with 2 levels higher (+2) than the correct exposure (0) and thus the outline of the car becomes a little white and the dark background gradually disappears. When photographing between 1.5 and 3 seconds, photographing is performed with 4 levels higher (+4) than the correct exposure (0) and thus the outline of the car appears whiter and the dark background disappears.

This type of photographing has an excessive exposure amount, and thus noise may be included in the image, but there is an advantage that the dark background of the subject disappears. If photographing is performed in the daytime under this condition, it would be possible to obtain an effect in which the background of the subject disappears.

FIG. 12 shows an example in which a user photographs in a rear curtain sync mode.

Referring to FIG. 12, it can be understood that, when photographing the car moving from left to right for three seconds, the photographing time interval is classified into a total of three intervals (0-1.5 sec, 1.5-2.5 sec, and 2.5-3 sec), and photographing is performed in the rear curtain sync mode with 4 underexposure (-4) in the first photographing time interval (0-1.5 sec), with 2 underexposure (-2) in the second photographing time interval (1.5-2.5 sec), and with the correct exposure (0) in the third photographing time interval (2.5-3 sec).

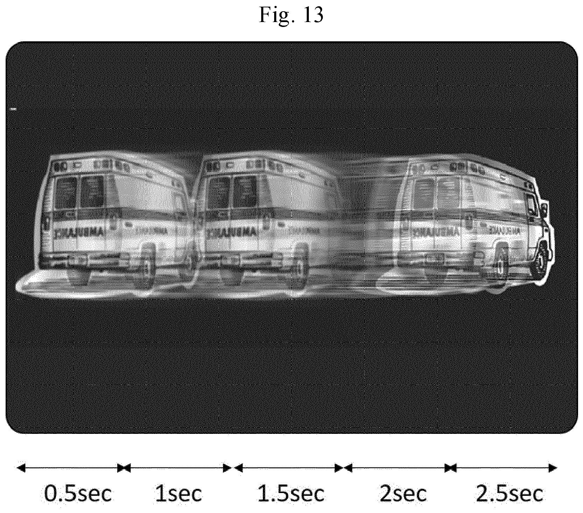

FIG. 13 shows an example in which a user photographs in a multi-curtain sync mode.

Fig. 13 shows a resulting picture obtained by photographing the car moving from left to right for 2.5 seconds, in such a way that the photographing interval is classified into a total of five intervals (0-0.5 sec, 0.5-1 sec, 1-1.5 sec, 1.5-2 sec, and 2-2.5 sec) and photographing is performed with the correct exposure (0) in the first interval (0-0.5 sec), with 4 underexposure (-4) in the second interval (0.5- 1 sec), with the correct exposure (0) again in the third interval (1-1.5 sec), with 4 underexposure (-4) in the fourth interval (1.5-2 sec), and the correct exposure (0) again in the last fifth interval (2-2.5 sec).

Referring to FIG. 13, it can be confirmed that the movement of the car is relatively clearly photographed for 0 to 0.5 seconds, 1 to 1.5 seconds, and 2 to 2.5 seconds, and the movement of the car is unclearly photographed (10-30%) during the remaining time intervals (0.5-1 sec, 1.5-2 sec).

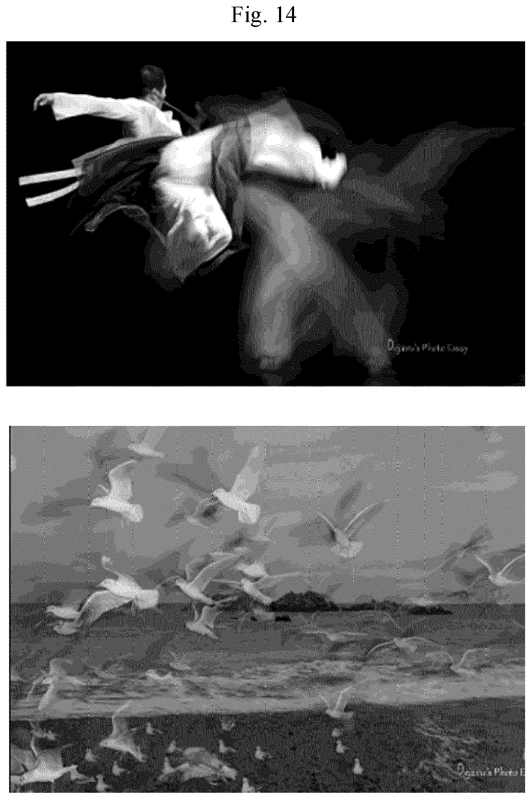

FIG. 14 shows an image actually photographed by applying a photographing method with a flash effect according to the present invention to a digital camera.

The image in the upper portion of FIG. 14 shows a dancing dancer who is photographed in a first curtain sync mode, and the image in the lower portion of FIG. 14 shows a seagull flying on the beach which is photographed in the first curtain sync mode, respectively.

Referring to FIG. 14, it can be understood that it is possible to achieve an effect similar to that of taking a picture using a flash without actually using the flash when applying the photographing method with the flash effect according to the present invention, and also the effect of the present invention may be improved when using the flash together.

In the above, the technical idea of the present invention has been described with the accompanying drawings, but this is an exemplary description of a preferred embodiment of the present invention, but does not limit the present invention. In addition, it is obvious that any person skilled in the art in the technical field to which the present invention pertains can modify and imitate various modifications without departing from the scope of the technical idea of the present invention.

### [Description of reference numerals]

- 110:: Setting a total photographing time
- 120:: Dividing a photographing time interval
- 130:: Selecting a photographing mode
- 140:: Selecting a variable
- 150:: Setting a variable

## Claims

1. A multi-functional photographing method for representing a flash effect by using an exposure amount, light sensitivity and a photographing shut-off function, which performs the flash effect by allowing a user to input a menu provided to the user in a digital camera which runs by an application that is activated after being downloaded in the digital camera or a server of the digital camera, the method comprising:
setting a total photographing time by setting a time (total photographing time) from an opening of a shutter to a closing of the shutter for a specific subject;
dividing a photographing time interval by dividing the total photographing time into a plurality of photographing time intervals;
selecting a variable by selecting at least one variable from the exposure amount, the light sensitivity, and the photographing shut-off function, which are applied to each of the photographing time intervals divided in the dividing of the photographing time interval; and
setting a variable by setting a value of the variable selected in the selecting of the variable,
wherein all of the times allocated to the plurality of photographing time intervals are the same, or at least one photographing time interval is set differently from the time allocated to the rest of the photographing time intervals.

2. The method of claim 1, further comprising:
selecting a photographing mode which is performed between the dividing of the photographing time interval and the selecting of the variable, and selects one of a first curtain mode, a rear curtain mode and a multi-curtain mode,
wherein a value of the variable corresponding to one of the three modes selected in the selecting of the photographing mode is set in the setting of the variable.

3. The method of claim 2, wherein a value of the exposure amount, which is a value of the variable, indicates a degree of correct exposure preset in the digital camera, a degree of overexposure having the exposure amount larger than the correct exposure, and a degree of underexposure having the exposure amount smaller than the correct exposure, and wherein a value of the light sensitivity, which is a value of the variable, indicates a degree of correct sensitivity preset in the digital camera, a degree of oversensitivity having the light sensitivity larger than the correct sensitivity, and a degree of undersensitivity having the light sensitivity smaller than the correct exposure.
